# EUROPEAN PATENT APPLICATION

(11) **EP 1 935 481 A1**
(43) Date of publication of application: **25.06.2008**
(21) Application number: 06026751.5
(22) Date of filing: 22.12.2006
(51) Int. Cl.: B01F 13/04, B01F 15/00

(54) **Agitator and method for cleaning an agitator**

(71) Applicant: Sun Chemical B.V., 1382 LV Weesp (NL)
(72) Inventor: Schünemann, Wolfgang, 60435 Frankfurt am Main (DE)
(74) Representative: Fuchs

(57) **Abstract**

The invention refers to an agitator for agitating at least one liquid or solid material and/or mixing and/or dissolving at least two liquid and/or solid materials with a drive-stirrer shaft and at least one stirrer connected to the drive-stirrer shaft, wherein the at least one stirrer can be driven in a working state for stirring, mixing and/or dissolving the materials via the drive-stirrer shaft by means of a driving motor. Additionally, the agitator provides a creep speed motor and the at least one stirrer is driven in a creep speed state via the drive-stirrer shaft by means of the creep speed motor only, wherein the creep speed motor features a lower power output than the driving motor. The invention also refers to a respective method for cleaning an agitator.

## Description

The invention refers to an agitator for agitating at least one liquid or solid material and/or mixing and/or dissolving at least two liquid and/or solid materials with a drive-stirrer shaft and at least one stirrer connected to the drive-stirrer shaft, wherein the at least one stirrer can be driven in a working state for stirring, mixing and/or dissolving the materials via the drive-stirrer shaft by means of a driving motor. Furthermore, the invention refers to a method for cleaning such an agitator.

The agitator mentioned above, which is also referred to as dissolver, is used in the chemical industry as so-called high-speed agitator with single or twin shaft with stirrers which are formed as disks, serrated disks, knives etc. for agitating, mixing and/or dissolving a material or more materials which are either solid or liquid. When utilising suitable drive aggregates such an agitator may also be used in so-called ex areas (explosion hazardous areas).

The processing of materials during which the stirrer or the stirrers are driven by a driving motor via a drive-stirrer shaft shall in the following be referred to as working state. Powerful driving motors with power outputs between 3 and 100 kW and a high number of revolutions (e.g. 1,600 revolutions per minute) are frequently used for such dissolvers.

In the processing of high viscous materials these settle stirring elements comprising stirrer shafts and stirrers, so that the stirring elements have to be cleaned after termination of work. In case of high viscous materials this cleaning can economically only be carried out manually with rotating stirring elements. Due to the powerful drive of the driving motors the persons effecting the cleaning may be injured physically. Possible injuries are due to the seizing of body parts by shafts, stirrers or rotating vessels. Furthermore, lacerations may occur. As a result of their high number of revolutions and power output the machines do not stop when clothes, gloves, tools (knives), wipes (rags) or, for instance, body parts get stuck in the stirrer shaft. In most cases it is not possible for the person concerned to reach the emergency switch quickly enough to avoid injuries.

Often, stirrer shafts and knives are stopped because of an electrical protection device, when the lid is taken off the mixing vessel or when no mixing vessel is provided for. Due to this, however, a cleaning of the stirring elements with motor turned on and rotating stirrer shaft is not possible.

Therefore, it is an object of the present invention to provide an agitator or to describe a method for cleaning an agitator with rotating stirring elements which will reduce the danger of injury to persons during the cleaning or during other work to be carried out at the stirrers or at stirrer shafts after the working state.

This object is solved by an agitator which provides for a creep speed motor in addition, wherein the at least one stirrer is driven in a creep speed state via the drive-stirrer shaft by the creep speed motor only, wherein the creep speed motor has a lower power output than the driving motor. Advantageously, such an agitator does not have the power to cause serious injury to a person working at the stirrer or stirrer shaft in the creep speed state when a creep speed motor with a power output of preferably less than 300 W is used. Furthermore, the agitator in accordance with the invention has the advantage to be simply constructed, can be upgraded to existing agitators and, moreover, saves energy as only the less powerful driving motor has to be activated during the cleaning in a creep speed state.

In a preferred embodiment of the invention the driving motor and the creep speed motor are coupled in such a way that the creep speed motor drags the driving motor in the creep speed state. This further reduces the danger of injuries.

Advantageously, the drive shaft is firmly fixed to a pulley driven via a belt or via several belts by the driving motor. In the preferred embodiment the pulley has, in addition to this, a groove with a groove wall and a friction wheel, driven by the creep speed motor, can be adjusted at the groove wall for driving the drive-stirrer shaft. This construction is particularly simple and constructed to be upgraded modularly and allows for a simple activation and deactivation of the friction wheel connected via a gear mechanism to the creep speed motor. In a particularly preferred embodiment the groove is of cylindrical shape. Another preferred embodiment is the use of a rubberized friction wheel. Due to the rubber coating more severe machine damage is excluded in case of a mechanical defect (e.g. in case of jamming)

In a further preferred embodiment the agitator comprises a standardized positioning cylinder, easily to be upgraded, moving the creep speed motor back and forth between the adjustment position and the deadjustment position.

In another preferred embodiment the agitator according to the invention comprises, in addition, a lifting device with a lifting motor which is provided for moving the stirrer in a direction essentially parallel to the rotation axis of the drive-stirrer shaft, wherein the creep speed motor can only be driven by means of the lifting device after having exceeded a predetermined altitude of the stirrer. In this connection it is particularly preferable if the driving motor cannot be activated if the lifting altitude of the stirrer has exceeded a predetermined first lifting-altitude threshold. In this lifting altitude the stirrer and the stirrer shafts represent a particular danger for the operator(s) of the agitator, so that an activation of the driving motor may not be allowed in this position.

In a further preferred embodiment of the invention a key for actuating the creep speed motor is provided for. This further reduces the danger of injury of the personnel working at the agitator, as the person concerned can release the key when clothes or body parts are seized by the stirrers or shafts as well as in other dangerous situations so that the creep speed motor stops immediately. Preferably, the distance between the key and the stirring elements should be about 1 m.

As a further effective and simple safety measure the agitator can be provided with at least one safety guard surrounding the agitator, wherein the at least one safety guard is provided with a switch which can only be energized for opening the at least one safety guard, if the stirrer has exceeded a predetermined second lifting-altitude threshold.

In another preferred embodiment of the invention the creep speed motor is a DC motor which is preferably provided with an oil lubricated and adjustable friction clutch. This increases the safety of the personnel working at the stirrer and stirrer shaft too, because the DC motor can be energized faster than an AC motor. In addition to this, in case of Amp peaks the DC motor does not exceed the preset value (e.g. the number of revolutions).

Furthermore, the above mentioned object will be solved by a method comprising the following steps:
a) termination of the operating state by deenergizing the driving motor,
b) waiting for a predetermined after-running time and/or until the drive-stirrer shaft falls below a predetermined revolution-speed threshold and
c) energizing the creep speed motor and cleaning of the at least one stirrer in said creep speed state.

This method is particularly simple and provides the operator cleaning the stirrer shaft and stirrer at the agitator with a high level of security, as the creep speed motor has only a small power output and may not cause serious injuries.

Preferably, the creep speed motor is energized by a key which is attached in such a way that the operator is able to reach it during cleaning, wherein the creep speed motor stops and the coupling between creep speed motor and drive-stirrer shaft is disconnected, if the key is not being actuated. Thereby, the safety of the personnel can be increased further, since the creep speed motor reacts directly without delay to the actuation of the key and to the missing of the actuation respectively.

It is advantageous for cleaning if the stirrer is being removed from a vessel comprising the at least one liquid or solid material for agitating, mixing and/or dissolving by means of the lifting device during the predetermined after-running time or after expiry of it. Thus, it is easier for the operator to reach the stirring elements for cleaning. Thereby, the safety of the personnel can be ensured particularly by stopping the lifting motor and turning down the speed of the drive-stirrer shaft to a predetermined first speed threshold after the stirrer has reached a first predetermined lifting-altitude threshold and, subsequently, by moving the at least one stirrer out of the vessel by means of the lifting device to a predetermined second lifting-altitude threshold and, after reaching the second lifting-altitude threshold, by waiting for the stop of the drive-stirrer before it is possible to energize the key for the creep speed motor.

Then the vessel can be removed after cleaning the stirrer and unlocking the centering pin.

Further objects, features, advantages and possibilities for applying the present invention may be taken from the following description of an embodiment with the accompanying drawings. All described and/or illustrated features per se or in combination form the subject matter of the invention, independent of their subsumption in the claims or their back reference.

The drawings show schematically, namely:

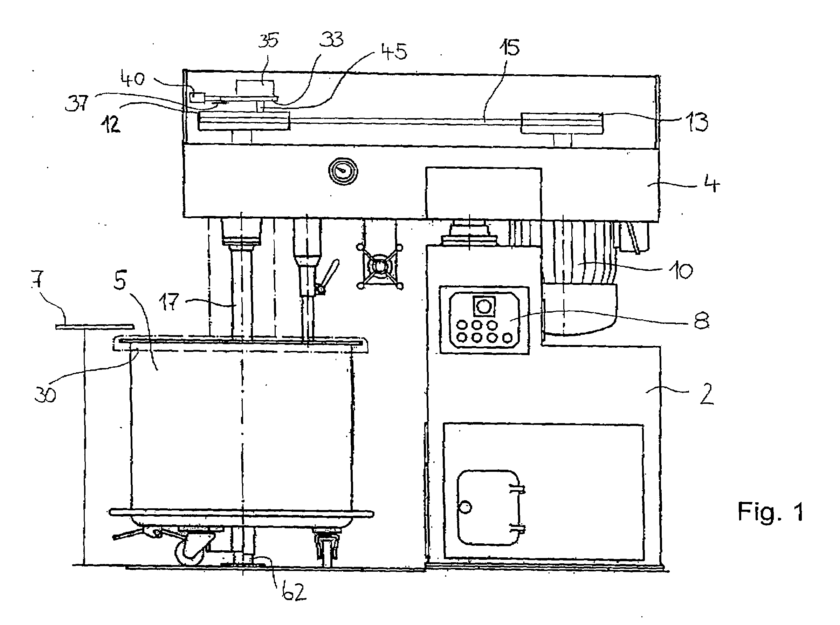

- Fig. 1: a side view of an agitator according to the invention,

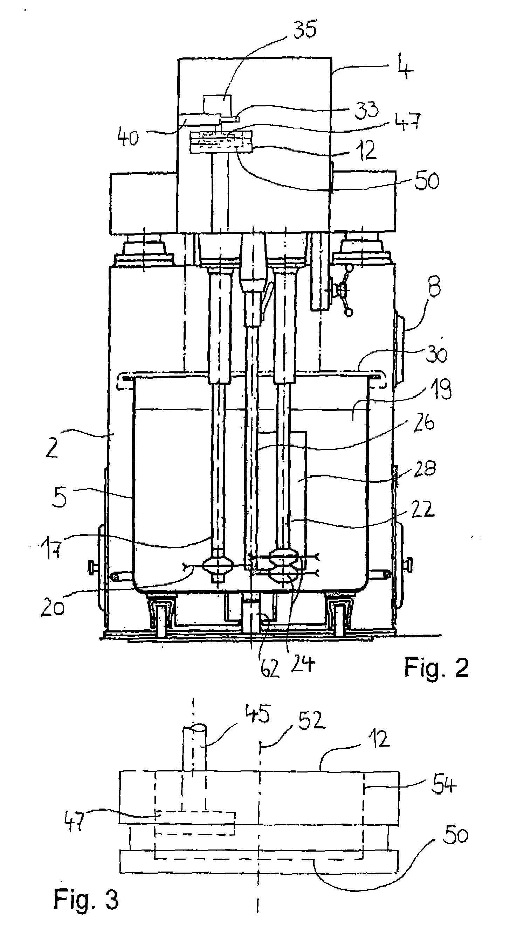

- Fig. 2: a cross-section of the agitator according to Fig. 1,
- Fig. 3: a side view of the pulley of the agitator according to Fig. 1,

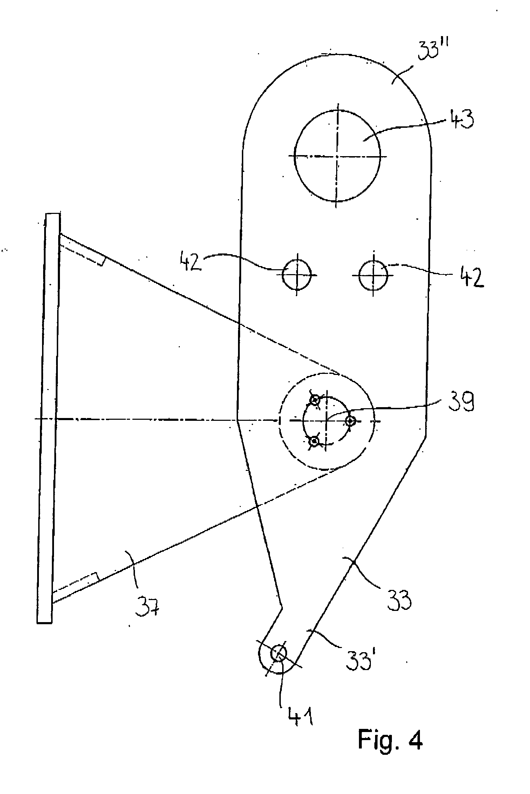

- Fig. 4: a top view of a support device for the creep speed motor of the agitator according to Fig. 1 and
- Fig. 5: a top view of a foundation plan of the agitator according to Fig. 1 with a sack rest.

The agitator according to the invention comprises a stand 2, an agitator head 4 and a vessel 5, in which the material or the materials 19 for agitating and/or mixing and/or dissolving are contained. The vessel 5 is loaded with the fluid or solid material(s) 19 via a sack rest 7, which is arranged on the side of vessel 5 and protrudes over the edge of vessel 5.

The stand 2 of the agitator contains, among others, the power supply for the agitator. A push-button control 8 is arranged at the front side of the stand 2. The agitator head 4 is mounted at the upper end of the stand 2 and protrudes over vessel 5. At the stand-sided end of the agitator head 4 is accommodated the driving motor 10 (e.g. motor of 75kW, cos ϕ = 0.8, 380 V Δ, 146 A, 1480 revolutions per minute, 50 Hz). The driving motor 10 shows preferably a power output of 3 to 100 kW. The driving motor 10 is connected to the drive shaft 17 protruding in the vessel 5 via a belt drive, comprising a first pulley 12, a second pulley 13 and a V belt 15 as well as an adjustment mechanism (not shown) which is arranged in the agitator head as well. Thereby, the second pulley 13 is the drive pulley and the first pulley 12 is the driven pulley. Preferably, the belt drive is provided with several V belts.

A stirrer 20 is arranged at the end of drive shaft 17 facing the first pulley 12 which consists of a serrated disk, for example. Another stirrer shaft 22 is provided for below the agitator head 4 next to the drive shaft 17 with a twin stirrer 24 as well as a skimmer shaft 26 with a skimmer 28 which also protrude into the vessel 5. Twin stirrer 24 with stirrer shaft 22 is driven by the gear mechanism (not shown) which is connected to drive shaft 17. The skimmer 28 with skimmer shaft 26 can be adjusted by hand.

In a preferred embodiment of the invention vessel 5 is covered by lid 30, so that neither material 19 nor parts of the stirrers 20, 24, of the skimmer 28 or of the corresponding shafts 17, 22, 26 can escape from vessel 5 in the drive state and injure the personnel working at the agitator or thus cause costs. Alternatively or additionally, a suction system (not shown) may be arranged opposite the sack rest 7 which filters dusts and vapours in a separate system. In this case the operator protection is ensured by safety guards described below, the locking of which is deactivated in the after-running time.

Moreover, a lifting device with a lifting motor (not shown) is provided for in agitator head 4 which moves the shafts 17, 22 and 26 with the stirrers 20, 24 and/or the skimmer 28 to the top out of vessel 5 or to the bottom into vessel 5.

In agitator head 4 a creep speed motor 35 is arranged on a support device with a support plate 33 above the first pulley 12. Preferably, the creep speed motor has a power output of less than 300 W. The support plate 33 is fixed to a supporting member 37 which is mounted to the agitator head 4. Thereby, support plate 33 is mounted pivotably at a pivot 39 at the supporting member 37, wherein the pivot 39 is arranged between a first end 33' and a second end 33" of the support plate 33. At the first end 33' the support plate 33 is connected to a positioning cylinder 40 at a first hole 41 which causes the support plate to turn around pivot 39 due to a change in its length. At the second end 33" of support plate 33 the creep speed motor 35 is arranged on the support plate 33 which is mounted preferably by means of two holes 42 provided for in the support plate.

A shaft 45 extending through the hole 43 of the support plate 33 of the creep speed motor 35 is provided with a friction wheel 47 at its lower end projecting away from said creep speed motor 35. Thereby, the creep speed motor 35 is connected to shaft 45 via a gear mechanism (not shown) and thus to the friction wheel 47 and drives the latter.

An AC motor with a frequency converter can be used as creep speed motor 35. In a preferred embodiment of the invention the creep speed motor 35 is provided for as a DC motor with a friction clutch. Advantageously, the friction clutch can be provided for in such a way that the slipping moment can be adjusted stepplessly by a shaft nut. Further preferred, the preferably oiled adjustable friction clutch is integrated in the gear mechanism of creep speed motor 35 and therefore does not require any additional space.

A groove 50 is provided for at the first pulley 12 at the front surface facing the creep speed motor 35 which is preferably of cylindrical shape and arranged concentrically with the circumference of the first pulley 12. The groove 50 is provided with a groove wall 54 extending essentially parallel to the rotational axis 52 of pulley 12.

In the working state, i.e. during operation of driving motor 10, the friction wheel 47 is located in a position distant from the groove wall 54 (deadjustment position). When the creep speed motor 35 is energized in the creep speed state the support plate 33 is moved (rotated) by the positioning cylinder 40 around the pivot 39 in such a way that friction wheel 47 is adjusted at the inner groove wall 54 and contacts it (adjustment position). Both, the adjustment and deadjustment position are controlled by an end switch. In the adjustment position the creep speed motor 35 drives on the one hand the drive shaft 17 via the friction wheel 47, so that the operator may clean the stirrers and the corresponding shafts. On the other hand, the second pulley 13 is driven by the V-belt 15 and thereby also the currentless driving motor 10 is dragged.

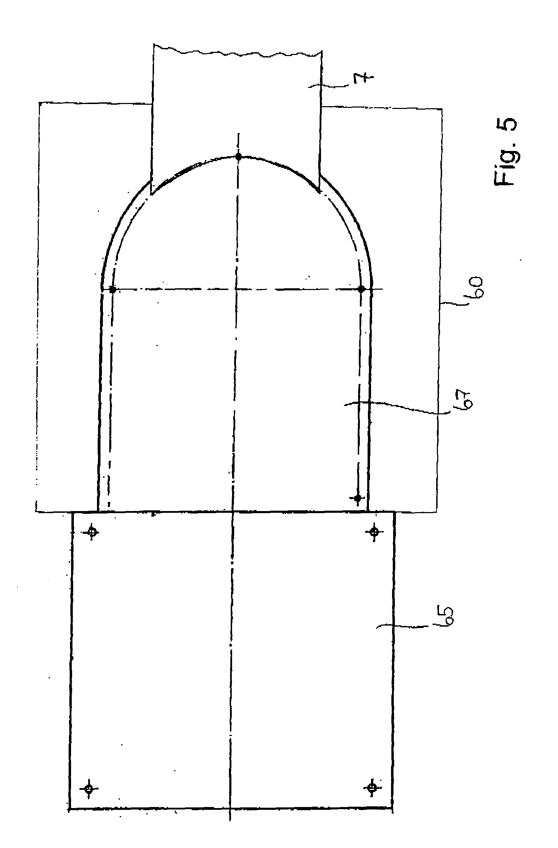

Fig. 5 shows the arrangement of safety guard 60 by means of a foundation plan. Starting from the area 65 for stand 2 the safety guard 60 surrounds the entire area 67 which is provided for the vessel 5 with the stirring elements, essentially along the circumference of a rectangle. The safety guard 60 also extends below the sack rest 7. The minimum distances of the safety guard are location-dependent and governed by standards DIN EN 349 (e.g. 58, 59, 68, 69) and T 020 12/99. The safety guard is closed by one or more solenoid switches (e.g. Schmersal switches) which are coupled with the agitator control and the emergency stop chain.

The inventive cleaning procedure works as follows: At first the driving motor 10 is deenergized to terminate the drive state. Then the after-running time is waited for which is approximately 10 to 30 seconds depending on the viscosity of the processed material or, in the run-down time, approximately 35 seconds after the deenergizing, the stirrer elements are lifted by the lifting motor (not shown) of the lifting mechanism while the safety guard 60 is still blocked. Thereby, a first predetermined lifting-altitude threshold is reached at a first end switch which is located at the lifting pillar arranged in stand 2. The end switch stops the lifting motor first and then decreases the number of revolutions of the drive shaft to 200 revolutions per minute. Only if this first revolution-speed threshold has been reached the lifting mechanism can be activated again and the unblocked lifting motor drives to the second end switch located at the lifting pillar which is at a second predetermined lifting-altitude threshold. The end switch deenergizes the driving motor 10.

The decrease of the number of revolutions to 200 per minute is so important because in the reverse procedure, in case of activation, the driving motor 10 starts in the last control position, i.e. with 200 revolutions per minute. Thereafter, the driving motor 10 may be decreased slowly to the number of revolutions/speed desired. This approach is particulary safe for the operator.

After stop of the stirrer shafts these cannot be driven by the driving motor 10 in the position of the stirring elements corresponding to the second lifting-altitude threshold. Now also the after-running time has lapsed so that it is possible to open the Schmersal switch(es) (solenoid switch(es)) accommodated at the safety guard 60. Subsequently, the operator may, for example, actuate the key for the creep speed mode located at push-button control 8 to clean the stirring elements. Then, the pneumatically operated positioning cylinder 40 effects the pressing of friction wheel 47 on the groove wall 54 of the first pulley 12 (adjustment position) by moving the support plate 33 around its pivot 39. An end switch controls whether the adjustment position of friction wheel 47 is reached correctly and gives the corresponding signal if there is a friction thereby effecting the acceleration of the creep speed motor 35 to a speed of approximately 150 revolutions per minute. Now the operating personnel may, while actuating the key for the screep speed mode with one hand, clean the shafts 17, 22, 26, the stirrer 20, 24 and, if any, the skimmer 28 by means of a scraper. Whenever the key is released the creep speed motor 35 is deactivated and the pneumatic positioning cylinder 40 moves in the deadjustment position which is controlled by the end switch (not shown). In this case the mechanical counterforces of the dragged driving motor 10 stop the stirring elements immediately.

After the cleaning is finished, the safety guard 60 may be opened completely. To change the vessel 5 the centering pin 62, which is, for example, fixed at the bottom and centered at the rear side of the vessel 5 has to be unlocked mechanically. After that vessel 5 may be removed.

For starting operation a new vessel (tub) 5 is installed, the safety guard 60 closed and the reset switch for the emergency chain of driving motor 10 actuated. The creep speed motor 35 is deenergized by this emergency reset at the latest and the friction wheel 47 is moved into the deadjustment position. Subsequently, the lifting motor moves the stirring elements downwards into the vessel 5. Only when the first lifting-altitude threshold has been exceeded the driving motor 10 may be started again at an initial speed of 200 revolutions per minute and its velocity may, as usual, be increased.

The agitator according to the invention realizes the basic concept to use the high power output of driving motor 10 and the high number of revolutions of drive shaft 17 only for the underlying object, the processing of the materials 19 (e.g. 75 kW and 1,600 revolutions per minute). Due to the installation of a second drive, the creep speed motor 35, which can only be actuated when certain requirements have been met, a cleaning of the shafts and stirring elements is possible without any hazard to the operator (power output smaller than 300 W, 150 revolutions per minute, torque of approximately 4 Nm or approximately 7 kg tensile force). The creep speed motor 35 can be controlled electrically and/or mechanically. A particular advantage of the invention is that the components and control parameters according to the invention can be upgraded modularly at relatively low costs.

### Reference numerals:

| | | | |
|---|---|---|---|
| 2 | stand | 41 | hole |
| 4 | agitator head | 42 | hole |
| 5 | vessel | 43 | hole |
| 7 | sack rest | 45 | shaft |
| 8 | push-button control | 47 | friction wheel |
| 10 | driving motor | 50 | groove |
| 12 | first pulley (driven pulley) | 52 | rotation axis of the first pulley 12 |
| 13 | second pulley (drive pulley) | 54 | groove wall |
| | | 60 | safety guard |
| 15 | V belt | 62 | centering pin |
| 17 | drive shaft | 65 | area for stand 2 |
| 19 | material | 67 | area for vessel 5 and stirring elements |
| 20 | stirrer | | |
| 22 | stirrer shaft | | |
| 24 | twin stirrer | | |
| 26 | skimmer shaft | | |
| 28 | skimmer | | |
| 30 | lid of vessel 5 | | |
| 33 | support plate | | |
| 33' | first end of the support plate 33 | | |
| 33" | second end of the support plate 33 | | |
| 35 | creep speed motor | | |
| 37 | supporting member | | |
| 39 | pivot of the support plate 33 | | |
| 40 | positioning cylinder | | |

## Claims

1. An agitator for agitating at least one liquid or solid material and/or mixing and/or dissolving at least two liquid and/or solid materials with a drive-stirrer shaft and at least one stirrer connected to the drive-stirrer shaft, wherein the at least one stirrer can be driven in a working state for stirring, mixing and/or dissolving the materials via the drive-stirrer shaft by means of a driving motor, **characterized in that** additionally a creep speed motor is provided for and that the at least one stirrer is driven in a creep speed state via the drive-stirrer shaft by means of the creep speed motor only, wherein the creep speed motor features a lower power output than the driving motor.

2. An agitator according to Claim 1, **characterized in that** the driving motor and the creep speed motor are coupled in such a way that the creep speed motor drags the driving motor in the creep speed state.

3. An agitator according to Claim 1 or 2, **characterized in that** the creep speed motor has a power output of less than 300 W.

4. An agitator according to one of the preceding Claims, **characterized in that** the drive-stirrer shaft is firmly fixed to a pulley driven via a belt by the driving motor, wherein said pulley has a groove with a groove wall and, wherein a friction wheel driven by the creep speed motor in creep speed state can be adjusted at the groove wall for driving the drive-stirrer shaft.

5. An agitator according to Claim 4, **characterized in that** the groove is of cylindrical shape.

6. An agitator according to one of the Claims 4 or 5, **characterized in that** the friction wheel comprises a rubber coating on its end face.

7. An agitator according to one of the Claims 4 to 6, **characterized in that** said agitator comprises a positioning cylinder attached to the agitator moving the creep speed motor between the adjustment position and the de-adjustment position.

8. An agitator according to one of the preceding Claims, **characterized in that** said agitator comprises a lifting device with a lifting motor which is provided for the movement of the stirrer in a direction running essentially parallel to the rotation axis of the drive-stirrer shaft, wherein the creep speed motor can only be driven by means of the lifting device after having exceeded a predetermined lifting altitude of the stirrer.

9. An agitator according to Claim 8, **characterized in that** the driving motor cannot be driven if the lifting altitude of the stirrer has exceeded a predetermined first lifting-altitude threshold.

10. An agitator according to one of the preceding Claims, **characterized in that** a key for actuating the creep speed motor has been provided for.

11. An agitator according to one of the preceding Claims, **characterized in that** at least one surrounding safety guard is provided for at the agitator wherein the at least one safety guard is provided with at least one switch which can only be energized for opening the at least one safety guard, if the stirrer has exceeded a predetermined second lifting-altitude threshold.

12. An agitator according to one of the preceding Claims, **characterized in that** the creep speed motor is a DC motor.

13. An agitator according to one of the preceding Claims, **characterized in that** the creep speed motor is provided with a friction clutch.

14. A method for cleaning an agitator according to one of the preceding claims comprising the following steps:
a) termination of the operating state by deenergizing the driving motor,
b) after deenergizing the driving motor waiting for a predetermined after-running time and/or until the drive-stirrer shaft falls below a predetermined revolution-speed threshold and
c) subsequently, energizing the creep speed motor which allows for manual cleaning of the at least one stirrer in said creep speed state.

15. A method according to Claim 14, **characterized in that** the creep speed motor is energized by a key which is attached in such a way that the operator is able to reach it by hand during cleaning, wherein the creep speed motor stops and the coupling between creep speed motor and drive-stirrer shaft is disconnected, if the key is not being actuated.

16. A method according to one of the Claims 14 or 15, **characterized in that** said at least one stirrer is being removed from a vessel comprising the at least one liquid or solid material for agitating, mixing and/or dissolving by means of the lifting device during the predetermined after-running time or after expiry of it.

17. A method according to Claim 16, **characterized in that** after the stirrer has reached a first predetermined lifting-altitude threshold, the lifting motor is stopped and the speed of the drive-stirrer shaft turned down to a predetermined first speed threshold and that subsequently the at least one stirrer is moved out of the vessel by means of the lifting device to a predetermined second lifting-altitude threshold and after reaching the second lifting-altitude threshold the stop of the drive-stirrer shaft is waited for before the key for the creep speed motor can be energized.

18. A method according to Claim 14 to 17, **characterized in that** the vessel is being removed after cleaning the stirrer and unlocking the centering pin.
